# FASCICULE DE BREVET EUROPEEN

(11) **EP 2 015 471 B1**
(45) Date de publication et mention de la délivrance du brevet: **29.09.2010**
(21) Numéro de dépôt: 08104276.4
(22) Date de dépôt: 05.06.2008
(51) Int. Cl.: H04B 7/15, H01Q 1/12

(54) **Matériel de bâtiment adapté à la répétition de signaux RF, et équipement de bâtiment correspondant**
Baumaterial geeignet zum Wiederholen von Funksignalen und Baugerät dafür
Building material adapted for repetition of RF signals and building equipment therefor

(30) Priorité: 18.06.2007 FR 0755828
(43) Date de publication de la demande: 14.01.2009
(73) Titulaire: Alcatel Lucent, 75008 Paris (FR)
(72) Inventeur: Lucidarme, Thierry, 78180 Montigny le Bretonneux (FR)
(74) Mandataire: Sciaux, Edmond

(56) Documents cités:
- EP-A- 1 411 584
- EP-A1- 0 514 078
- WO-A-03/032524
- US-A1- 2003 103 474
- US-A1- 2005 254 442

## Description

L'invention concerne le domaine de la répétition de signaux radiofréquences (RF) devant être échangés entre une station (éventuellement de base (ou équivalent)) d'un réseau de communication radio et au moins un terminal de communication situé dans un espace entouré de parois tel qu'un bâtiment.

On entend ici par « réseau de communication radio » tout type d'infrastructure de transmission, qu'il s'agisse d'un réseau de diffusion radio (monodirectionnelle ou bidirectionnelle) terrestre et/ou satellitaire, ou d'un réseau radio (ou sans fil) cellulaire, ou apparenté, et notamment un réseau de type GSM, UMTS (3GPP), CDMA, CDMA 2000 (3GPP2), FDD (« Frequency Division Duplex »), TDD (« Time Division Duplex »), WiMAX, evolved-UTRAN (également appelé LTE (« Long Term Evolution »)), ainsi que de façon non restrictive un réseau local de type FWA (pour « fixed wireless access ») de moindre mobilité.

Par ailleurs, on entend ici par « terminal de communication » tout type de terminal de communication fixe ou mobile (ou portable) capable d'échanger des données avec un autre terminal de communication ou avec un équipement de réseau, par voie filaire ou par voie d'ondes. Par conséquent, il pourra par exemple s'agir d'un téléphone ou ordinateur fixe connecté à un serveur ou routeur local muni d'une interface de communication radio, d'un téléphone mobile, d'un ordinateur portable ou assistant numérique personnel (ou PDA) muni d'une interface de communication radio, d'un serveur ou routeur local muni d'une interface de communication radio, ou d'un récepteur de programmes de télévision, de radiodiffusion ou de vidéos, terrestre ou satellitaire.

Comme le sait l'homme de l'art, l'échange de signaux RF entre une station (éventuellement de base (ou équivalent)) et au moins un terminal (de communication) situé à l'intérieur d'un espace entouré de parois est souvent difficile en raison de l'atténuation de leur intensité induite notamment par la traversée de cloison(s) et/ou la présence d'objet(s) (notion d'ombre) et/ou l'angle d'incidence desdits signaux RF par rapport à une cloison. Ainsi, des atténuations de 30 à 40 dB peuvent fréquemment survenir, notamment dans certaines parties de bâtiments.

Cette atténuation perturbe déjà, voire rend parfois impossible, certaines conversations téléphoniques (transmission de données de voix). Mais, elle est encore plus gênante pour les communications à haut débit, comme par exemple celles utilisées pour transférer des données (ou « data »), éventuellement multimédia en haut débit (qui nécessitent l'utilisation d'une modulation d'ordre plus élevée et donc d'un rapport signal à bruit élevé).

Afin d'améliorer la situation, on peut par exemple implanter dans les bâtiments des stations de base miniaturisées (« micro BTS » ou « femto BTS »), voire même des routeurs-stations de base (ou BSRs, pour « Base Station Routers ») qui disposent d'une interface IP (« Internet Protocol ») vers le réseau. Mais cette solution s'avère malgré tout onéreuse en raison des coûts d'installation et de maintenance des équipements et des câblages. En outre, elle entraîne une éventuelle augmentation du nombre, ou une redistribution, des points de concentration et de gestion de la capacité dans le réseau que sont les contrôleurs de stations de base (appelés RNCs dans le cas d'un réseau UMTS).

Il est également possible d'installer à l'extérieur d'un bâtiment ou véhicule un premier émetteur-récepteur radio couplé à un amplificateur, puis d'effectuer au moins un trou (avec une perceuse) dans le(s) matériau(x) de bâtiment sur le(s)quel(s) est installé l'émetteur-récepteur extérieur, afin de faire passer un câble électrique destiné à le relier à un second émetteur-récepteur installé à l'intérieur du bâtiment ou véhicule. Mais, on comprendra que cela nécessite des interventions qui peuvent éventuellement entraîner une dégradation du (des) matériau(x) de bâtiment ayant fait l'objet d'un percement.

Il est également possible de placer un répéteur à l'extérieur d'un bâtiment ou véhicule. C'est notamment ce qui est proposé dans les documents brevet WO 03/058850 et US 6,731,904.

Plus précisément, le document brevet WO 03/058850 propose d'installer à l'extérieur d'un bâtiment un répéteur chargé de collecter les signaux RF descendants (ou « downlink »), respectivement montants (ou « uplink »), et de les retransmettre (toujours sous forme de signaux RF) en direction de l'intérieur du bâtiment, respectivement vers une station de base, au moyen d'une antenne à grand gain, c'est-à-dire avec un réflecteur. Cette solution permet de s'affranchir de la plupart des causes qui sont à l'origine des atténuations, mais elle s'avère également onéreuse, encombrante et inesthétique du fait de l'utilisation d'un réflecteur à grand gain.

Le document brevet US 6,731,904 propose d'installer à une certaine distance d'un bâtiment un répéteur chargé de collecter les signaux RF descendants (ou « downlink »), respectivement montants (ou « uplink »), et de les retransmettre à 180° (toujours sous forme de signaux RF), après les avoir amplifiés, en direction du bâtiment, respectivement vers une station de base. Cette solution ne permet de s'affranchir que d'une partie des causes qui sont à l'origine des atténuations.

Aucune solution connue n'apportant une entière satisfaction, l'invention a donc pour but d'améliorer la situation pour un coût réduit et/ou un faible encombrement.

Elle propose à cet effet un matériel de bâtiment comprenant :
- des faces opposées interne et externe,
- une traversée terminée par des sorties interne et externe situées respectivement au niveau des faces interne et externe, et destinée à permettre le transfert de signaux radiofréquences entre ces dernières, et
- au moins un connecteur choisi parmi un connecteur interne, solidarisé à la face interne au niveau de la sortie interne et propre à être connecté à un répéteur interne de signaux RF (devant être échangés entre une station (éventuellement de base (ou équivalent)) d'un réseau de communication radio et au moins un terminal de communication situé dans un bâtiment), et un connecteur externe, solidarisé à la face externe au niveau de la sortie externe et propre à être connecté à des moyens externes d'émission et/ou de réception de signaux RF.

Le matériel de bâtiment selon l'invention peut comporter d'autres caractéristiques qui peuvent être prises séparément ou en combinaison, et notamment :
- sa traversée peut par exemple loger au moins un câble coaxial agencé pour transférer les signaux RF, ou bien comprendre une face interne métallisée et définir un conduit de guidage d'ondes RF ;
- il peut comprendre à la fois le connecteur interne et le connecteur externe;
- sa face externe peut être pourvue des moyens externes d'émission et/ou de réception de signaux RF ;
   ➢ les moyens externes d'émission et/ou de réception de signaux RF peuvent comprendre une antenne RF choisie parmi (au moins) les antennes de type monopôle, les antennes de type dipôle et les antennes de type microstrip ;
- sa face interne peut être pourvue du répéteur interne ;
   ➢ dans ce cas, le connecteur externe peut par exemple constituer un élément de connexion des moyens externes d'émission et/ou de réception de signaux RF ;
- il peut comprendre au moins une cellule solaire destinée à être installée à l'extérieur et agencée pour délivrer une tension continue propre à alimenter le répéteur interne ;
- il peut par exemple se présenter sous la forme d'une paroi ;
   ➢ la paroi peut par exemple constituer une vitre, une tuile, une porte, une brique ou un parpaing (ou analogue).
- en variante, il peut par exemple se présenter sous la forme d'un châssis.

L'invention propose également un équipement de bâtiment comprenant un matériel de bâtiment du type de celui présenté ci-avant. Cet équipement peut par exemple être une fenêtre (ouvrante (éventuellement basculante) ou dormante), une porte ou un élément de construction.

L'invention est particulièrement bien adaptée, bien que de façon non exclusive, aux réseaux cellulaires (ou mobiles), et plus généralement à toute application nécessitant la couverture de l'intérieur d'un bâtiment par une forme d'onde qui est générée par un émetteur qui est situé à l'extérieur dudit bâtiment, comme par exemple une station de base cellulaire, un satellite, un émetteur (ou station) radio ou un émetteur (ou station) de télévision terrestre ou satellitaire.

D'autres caractéristiques et avantages de l'invention apparaîtront à l'examen de la description détaillée ci-après, et des dessins annexés, sur lesquels :
- la figure 1 illustre de façon très schématique et fonctionnelle un premier exemple de réalisation d'un équipement de bâtiment selon l'invention,
- la figure 2 illustre de façon très schématique, dans une vue de face du côté interne, un exemple de réalisation d'une paroi selon l'invention faisant partie d'un équipement de bâtiment selon l'invention,
- la figure 3 illustre de façon très schématique et fonctionnelle un second exemple de réalisation d'un équipement de bâtiment selon l'invention, et
- la figure 4 illustre de façon très schématique, dans une vue de face du côté interne, un exemple de réalisation d'un châssis selon l'invention faisant partie d'un équipement de bâtiment selon l'invention.

Les dessins annexés pourront non seulement servir à compléter l'invention, mais aussi contribuer à sa définition, le cas échéant.

L'invention a pour objet de permettre la répétition de signaux radiofréquences (RF), à coût réduit et/ou faible encombrement, entre une station (éventuellement de base (ou équivalent)) d'un réseau de communication radio et au moins un terminal de communication qui est situé dans un bâtiment, au moyen d'un matériel de bâtiment faisant éventuellement partie d'un équipement de bâtiment.

Dans ce qui suit, on considère à titre d'exemple non limitatif que le réseau de communication radio est un réseau cellulaire de type UMTS (ou équivalent). Mais, l'invention n'est pas limitée à ce type de réseau radio. Elle concerne en effet toute infrastructure de transmission par voie d'ondes, qu'il s'agisse d'un réseau de diffusion radio (monodirectionnelle ou bidirectionnelle) terrestre et/ou satellitaire, ou d'un réseau radio (ou sans fil) cellulaire, ou apparenté, et notamment les réseaux de types GSM, CDMA, CDMA 2000, FDD, TDD, WiMAX, evolved-UTRAN (ou LTE). D'une manière générale, l'invention concerne toute application nécessitant la couverture de l'intérieur d'un bâtiment (immeuble, maison ou analogue) par une forme d'onde qui est générée par un émetteur (ou station) qui est situé(e) à l'extérieur dudit bâtiment, comme par exemple une station de base cellulaire, un satellite, un émetteur radio ou un émetteur de télévision terrestre ou satellitaire.

Par ailleurs, on considère dans ce qui suit, à titre d'exemple non limitatif, que les terminaux de communication sont des téléphones mobiles. Mais, l'invention n'est pas limitée à ce type de terminal de communication. Elle concerne en effet tout type de terminal de communication fixe ou mobile (ou portable) capable d'échanger des données avec un autre terminal de communication ou avec un équipement de réseau, par voie filaire ou par voie d'ondes, et notamment les téléphones ou ordinateurs fixes connectés à un serveur ou routeur local muni d'une interface de communication radio, les ordinateurs portables et les assistants numériques personnels (ou PDAs) munis d'une interface de communication radio, les serveurs ou routeurs locaux munis d'une interface de communication radio, les récepteurs de programmes de télévision ou de radiophonie ou de vidéos terrestres ou satellites (comme par exemple des « set-top boxes » ou des « Customer Premises Equipments » (ou CPE), tels que des passerelles résidentielles (ou residential gateways)).

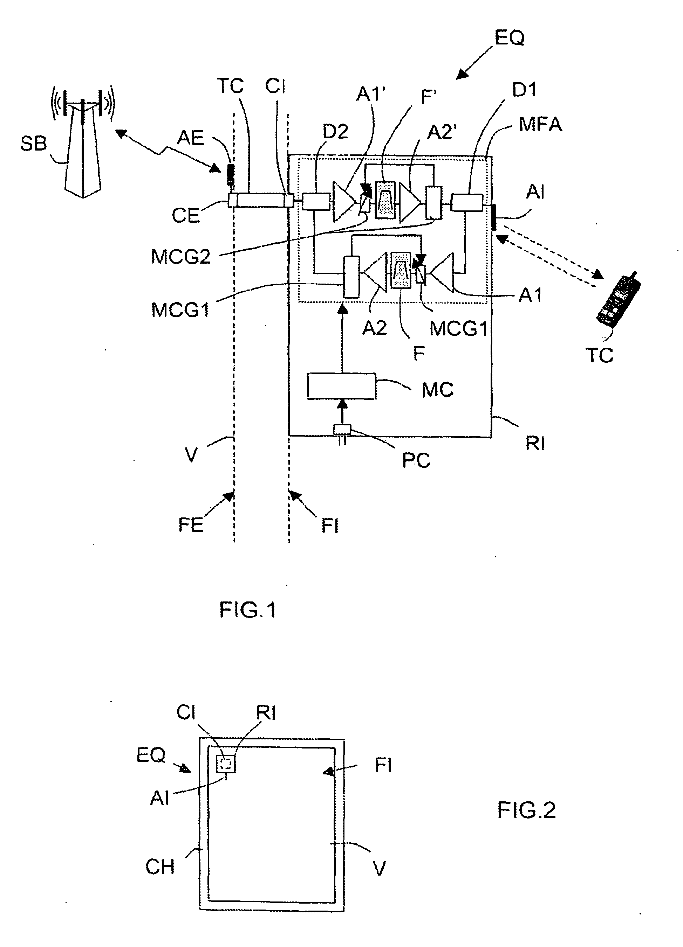

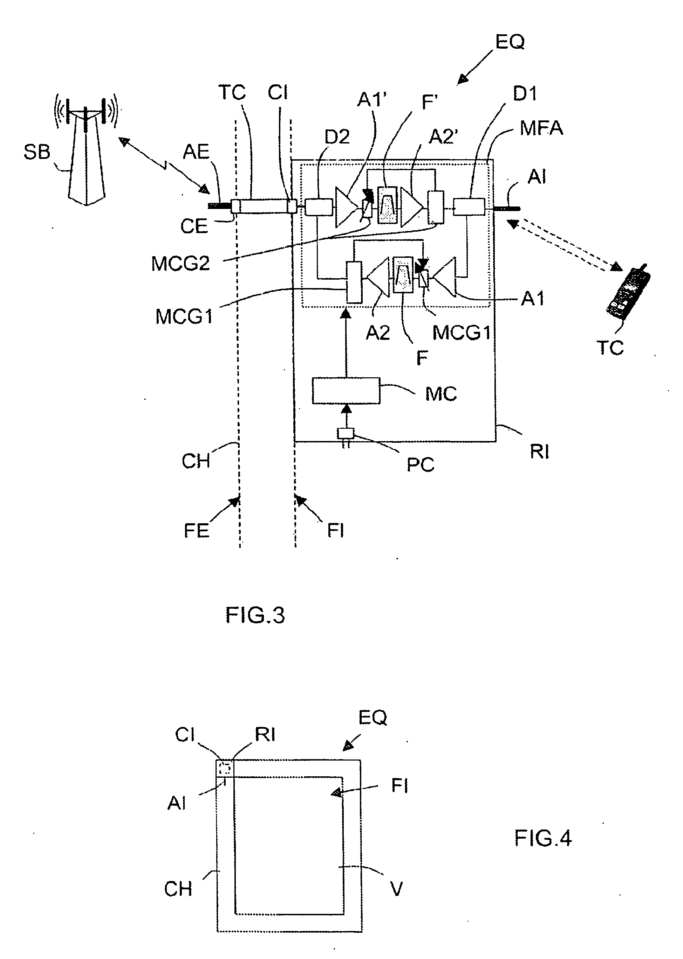

Afin de permettre la répétition précitée des signaux RF, l'invention propose tout d'abord un matériel de bâtiment (V, CH) qui peut se présenter sous la forme d'une paroi V, comme cela est illustré sur les figures 1 et 2, ou bien sous la forme d'un châssis (ou chambranle ou encadrement) CH, comme cela est illustré sur les figures 3 et 4.

La paroi V peut être de tout type dès lors qu'elle est destinée à faire partie d'un bâtiment ou d'un équipement de bâtiment EQ, et qu'elle comporte une face dite interne Fl, destinée à être orientée vers l'intérieur du bâtiment et au contact de l'air intérieur, et une face dite externe FE, destinée à être orientée vers l'extérieur du bâtiment et au contact de l'air extérieur.

Une telle paroi V peut par exemple constituer une vitre, une tuile, une porte, une brique ou un parpaing (ou analogue), voire même une cloison préfabriquée. Par ailleurs, une telle paroi V peut par exemple faire partie d'une fenêtre (ouvrante (éventuellement basculante) ou dormante), d'une porte-fenêtre, d'une baie vitrée, d'une porte, voire même d'une cloison préfabriquée.

Le châssis CH peut être de tout type dès lors qu'il est destiné à faire partie d'un équipement de bâtiment EQ et à recevoir une paroi (éventuellement vitrée), et qu'il comporte une face dite interne FI, destinée à être orientée vers l'intérieur du bâtiment et au contact de l'air intérieur, et une face dite externe FE, destinée à être orientée vers l'extérieur du bâtiment et au contact de l'air extérieur.

Un tel châssis CH peut par exemple faire partie d'une fenêtre (ouvrante (éventuellement basculante) ou dormante), d'une porte-fenêtre, d'une baie vitrée, d'une porte, voire même d'une cloison préfabriquée. On notera que le châssis peut être également appelé chambranle ou encadrement. Il peut par ailleurs être réalisé en tout type de matériau, et notamment en bois, en aggloméré, en plastique ou en métal (par exemple en aluminium).

Dans ce qui suit, on entend par « équipement de bâtiment » un équipement destiné à faire partie d'un bâtiment et comportant au moins un matériel de bâtiment selon l'invention se présentant soit sous la forme d'une paroi V selon l'invention (montée dans un châssis de type standard, comme illustré sur la figure 2), soit sous la forme d'un châssis CH selon l'invention (qui supporte une paroi V de type standard, comme illustré sur la figure 4).

Un matériel de bâtiment V ou CH selon l'invention comprend, en au moins un endroit choisi, au moins une traversée TC, un connecteur interne CI et/ou un connecteur externe CE.

La traversée TC est un passage (ou conduit) qui est ménagé dans l'épaisseur du matériel de bâtiment V ou CH, qui est terminé par des sorties interne et externe situées respectivement au niveau des faces interne FI et externe FE du matériel de bâtiment V ou CH, et qui est propre à permettre le transfert de signaux RF entre ces faces interne FI et externe FE.

Il est important de noter que la traversée TC peut constituer soit un passage pour au moins un câble de transfert de signaux RF (éventuellement sous forme optique), comme par exemple un câble coaxial (éventuellement tressé et/ou flexible) ou une fibre optique (si l'on prévoit en complément côté interne et côté externe des moyens de conversion), soit un conduit de guidage d'ondes RF (de tout type de section et de tout type de réalisation), ce qui nécessite que sa face interne soit métallisée. La fonction de cette traversée TC est de permettre la propagation de modes électromagnétiques choisis pour le transfert de signaux RF de sa sortie interne (située du côté de sa face interne FI) vers sa sortie externe FE (située du côté de sa face externe FE) et/ou inversement.

On notera que la traversée TC peut être définie au moins partiellement dans (ou par) le conduit d'aération qui est souvent prévu dans le châssis d'une fenêtre ou d'une porte. Dans ce cas, le câble de transfert peut emprunter ledit conduit d'aération.

Le connecteur externe CE est destiné à être solidarisé à la face externe FE du matériel de bâtiment V ou CH au niveau de la sortie externe de la traversée TC, et agencé de manière à être connecté à des moyens externes d'émission et/ou de réception de signaux RF AE. Ces derniers (AE) comportent par exemple une antenne adaptée à l'application visée. Tout type d'antenne de faible encombrement et pouvant être fixé sur une paroi V peut être utilisé. Ainsi, on peut utiliser une antenne RF sensible au champ électrique, comme par exemple une antenne de type monopôle (comme c'est le cas dans l'exemple de la figure 1), ou de type dipôle, ou encore de type microstrip plus directive (classiquement le gain d'une antenne de type pavé (ou « patch ») est d'environ 6 dB). On peut également utiliser une antenne RF sensible au champ magnétique, comme par exemple une antenne en forme de cadre ou de boucle.

L'antenne externe AE est de préférence installée sur la face externe FE de la paroi V (voir figure 1) ou du châssis CH (voir figures 3 et 4). Tout type de fixation peut être envisagé, et notamment le collage par effet « ventouse » ou au moyen d'un adhésif, la fixation au moyen d'aimants, ou le vissage.

Le connecteur interne CI est destiné à être solidarisé à la face interne Fl du matériel de bâtiment V ou CH au niveau de la sortie externe de la traversée TC, et agencé de manière à être connecté à un répéteur interne de signaux RF RI de type standard.

Tout type de connecteur interne Cl ou externe CE adapté aux radiofréquences peut être utilisé. Ainsi, on peut utiliser des connecteurs de type « sub-click » ou « push-on » qui sont dédiés notamment aux applications hyperfréquences et qui peuvent se clipser sur des sorties adaptées d'un conduit (ici la traversée TC). On peut également utiliser des connecteurs de type SMA (« Sub-Miniature version A ») qui sont dédiés notamment aux applications hyperfréquences et qui peuvent se visser sur des sorties filetées et adaptées d'un conduit (ici la traversée TC). Il est également possible d'utiliser d'un côté (par exemple au niveau de la sortie externe) un connecteur externe CE de type SMA étanche et de l'autre côté (par exemple au niveau de la sortie interne) un connecteur interne CI de type sub-click ou push-on. D'autres types de connecteur peuvent être utilisés, et notamment ceux connus de l'homme de l'art sous les acronymes SMB (« Sub-Miniature version B » - type push-on), SSMB, SSMA, SMP, GPO (« General Purpose Output » - type push-on), GPPO et QMA. Les sociétés RADIALL et AMPHENOL commercialisent certains au moins des connecteurs précités.

On comprendra que le matériel de bâtiment V ou CH peut être initialement pourvu soit du seul connecteur interne CI, soit du seul connecteur externe CE, soit à la fois du connecteur interne Cl et du connecteur externe CE.

Le répéteur interne RI est de préférence destiné à être placé sur la face interne Fl de la paroi V ou du châssis CH, si possible à proximité du connecteur interne CI. De nouveau, tout type de fixation peut être envisagé, et notamment le collage par effet « ventouse » ou au moyen d'un adhésif, la fixation au moyen d'aimants, ou le vissage.

L'agencement du répéteur interne RI dépend de l'application visée. Dans les deux exemples de réalisation illustrés sur les figures 1 et 3, le répéteur interne RI est dédié aux communications bidirectionnelles selon deux fréquences différentes. Il comporte de ce fait un module de filtrage et d'amplification MFA à deux branches de traitement. Par exemple, dans le cas d'un réseau radio de type FDD, les branches de traitement sont dédiées respectivement aux transmissions montantes et descendantes selon deux fréquences différentes (par exemple 2,140 GHz en transmission descendante (ou downlink) et 1,950 GHz en transmission montante (ou uplink)). Les extrémités opposées de ces deux branches sont connectées à des duplexeurs D1 et D2 qui sont eux-mêmes connectés respectivement à des première et seconde entrées/sorties du module de filtrage et d'amplification MFA du répéteur interne RI.

La première entrée/sortie est connectée à des moyens d'émission/réception de signaux RF AI, et la seconde entrée/sortie est connectée au connecteur interne CI.

Mais, le répéteur interne RI peut être dédié aux communications monodirectionnelles selon une unique fréquence. Dans ce cas, qui correspond par exemple à une application de type diffusion de programmes de télévision, le module de filtrage et d'amplification MFA du répéteur interne RI ne comporte qu'une seule branche et dépourvue de duplexeurs.

Les moyens d'émission/réception de signaux RF AI, comportent par exemple une antenne adaptée à l'application visée. Tout type d'antenne de faible encombrement et pouvant par exemple être fixé sur un boîtier de répéteur peut être utilisé. Ainsi, on peut utiliser une antenne RF sensible au champ électrique, comme par exemple une antenne de type monopôle (comme c'est le cas dans l'exemple de la figure 1), ou de type dipôle, ou encore de type microstrip plus directive. On peut également utiliser une antenne RF sensible au champ magnétique, comme par exemple des antennes en forme de cadre ou de boucle.

Cette antenne interne Al est chargée de recevoir les signaux RF qui sont transmis par les terminaux de communication TC qui sont situés dans le bâtiment et d'émettre (par voie d'ondes) à destination de ces terminaux de communication TC les signaux RF qui proviennent de la station de base SB l'antenne externe AE et le répéteur interne RI.

Lorsque l'on utilise des antennes RF interne Al et externe AE de type microstrip, il est préférable de les installer dans des directions diamétralement opposées, afin que leurs rayonnements respectifs ne se perturbent pas. Afin de limiter encore plus les perturbations, on peut utiliser des antennes microstrip hémisphériques.

Lorsque l'on utilise des antennes RF interne Al et externe AE de type monopôle, il est préférable (comme illustré sur la figure 3) d'installer l'une en position supérieure et l'autre en position inférieure dans des plans parallèles (c'est-à-dire tête-bêche) de façon à pouvoir bénéficier de l'isolation radioélectrique induite par le cône mort de rayonnement de l'antenne monopôle. Mais, dans une variante, et comme illustré sur la figure 1, on peut également placer les antennes RF interne AI et externe AE de type monopôle perpendiculairement aux faces interne FI et externe FE, respectivement, afin de bénéficier de l'effet d'isolation radioélectrique induit par leurs cônes morts de rayonnement.

Par exemple, la branche dédiée aux transmissions montantes (c'est-à-dire des terminaux TC vers la station SB) au sein du module de filtrage et d'amplification MFA du répéteur interne RI peut comprendre :
- un premier amplificateur A1 dont l'entrée est connectée à une sortie du duplexeur D1,
- un variateur de gain, d'un module de contrôle de gain automatique (ou AGC) MCG1, dont l'entrée est connectée à la sortie du premier amplificateurA1,
- un filtre passe bande F dont l'entrée est connectée à la sortie du variateur de gain MCG1,
- un second amplificateur A2 dont l'entrée est connectée à la sortie du filtre passe bande F,
- un contrôleur de gain, du module de contrôle de gain automatique (ou AGC) MCG1, dont l'entrée est connectée à la sortie du second amplificateur A2, et la sortie est connectée à une entrée du duplexeur D2.

On notera que le module de contrôle de gain automatique (ou AGC) MCG1 est destiné à lisser les variations dynamiques d'atténuations, par exemple comprises entre environ 30 et 80 dB.

Par exemple, la branche dédiée aux transmissions descendantes (c'est-à-dire de la station SB vers les terminaux TC) au sein du module de filtrage et d'amplification MFA du répéteur interne RI peut comprendre :
- un premier amplificateur A1' dont l'entrée est connectée à une sortie du duplexeur D2,
- un variateur de gain, d'un module de contrôle de gain automatique (ou AGC) MCG2, dont l'entrée est connectée à la sortie du premier amplificateur A1',
- un filtre passe bande F' dont l'entrée est connectée à la sortie du variateur de gain MCG2,
- un second amplificateur A2' dont l'entrée est connectée à la sortie du filtre passe bande F',
- un contrôleur de gain, du module de contrôle de gain automatique (ou AGC) MCG2, dont l'entrée est connectée à la sortie du second amplificateur A2', et la sortie est connectée à une entrée du duplexeur D1.

On notera que le module de contrôle de gain automatique (ou AGC) MCG2 est également destiné à lisser les variations dynamiques d'atténuations, par exemple comprises entre environ 30 et 80 dB.

Afin de pouvoir fonctionner, et comme illustré sur les figures 1 et 3, le répéteur interne RI comprend des moyens d'alimentation électrique. On notera que le module de filtrage et d'amplification MFA du répéteur interne RI nécessite un courant continu.

Par conséquent, et comme illustré sur les figures 1 et 3, le répéteur interne Rl peut par exemple comprendre un module de conversion MC chargé de convertir le courant alternatif, issu du secteur par l'intermédiaire d'un connecteur électrique PC, en un courant continu destiné à alimenter son module de filtrage et d'amplification MFA. On notera que le répéteur interne RI peut éventuellement comprendre une batterie alimentée en courant continu par le module de conversion MC. Cette batterie est alors destinée à fournir du courant continu au répéteur interne Rl au moins en cas de panne de secteur.

Le courant électrique qui alimente le répéteur interne RI peut également avoir une origine externe. Par exemple, le répéteur interne RI peut être alimenté en courant continu par des moyens d'alimentation électrique extérieures comportant au moins une cellule solaire délivrant une tension continue aux bornes d'un régulateur raccordé à une batterie (tous deux situés à l'intérieur du bâtiment, par exemple). Ce régulateur est destiné à protéger la cellule et la batterie contre les surcharges ou les tensions trop basses. La tension continue issue de la cellule solaire extérieure (par exemple celle commercialisée sous la référence SOL4 par la société GOTRONIC ou l'une de celles qui sont fabriquées par la société SOLEMS) peut être transmise sur le câble coaxial (qui est utilisé dans la traversée TC pour transférer les signaux RF, entre son âme et son blindage, comme cela se fait notamment pour injecter une tension d'alimentation sur un câble RF pour alimenter un élément déporté. Dans ce cas, on peut par exemple utiliser un connecteur externe CE adapté comprenant une entrée/sortie permettant le raccordement à l'antenne externe AE, une entrée permettant le raccordement à la cellule solaire, et une entrée/sortie permettant le raccordement au câble coaxial logé dans la traversée TC. Mais, on peut également envisager de faire passer dans la traversée TC un câble coaxial et un câble dédié spécifiquement à l'alimentation du module de filtrage et d'amplification MFA.

On notera qu'une à deux cellules solaires d'environ 5 cm² de surface peuvent par exemple suffire à alimenter le module de filtrage et d'amplification MFA.

Le répéteur interne Rl peut être réalisé de façon compacte et peu encombrante, par exemple en réalisant tout ou partie de ses constituants en des endroits choisis de cartes à circuits imprimés ou intégrés, et notamment son module de filtrage et d'amplification MFA. On peut également regrouper dans un ensemble tous les constituants électriques ou électroniques du répéteur interne RI.

On notera que l'on peut fabriquer un matériel de bâtiment V ou CH selon l'invention (c'est-à-dire seulement composé d'une paroi V ou d'un châssis CH comportant une traversée TC terminée par deux connecteurs interne CI et externe CE) en vue de son installation dans un bâtiment. Dans ce cas, le répéteur interne RI et l'antenne externe AE sont fixés sur le matériel de bâtiment V ou CH et connectés aux connecteurs interne CI et externe CE juste avant son installation ou après celle-ci.

Mais, on peut également fabriquer un équipement de bâtiment EQ selon l'invention en assemblant une paroi V selon l'invention à un châssis standard, ou bien une paroi standard à un châssis CH selon l'invention, en vue de son installation dans un bâtiment. Dans ce cas, le répéteur interne RI et/ou l'antenne externe AE est/sont fixé(s) sur le matériel de bâtiment V ou CH juste avant l'installation de l'équipement EQ ou après celle-ci.

On peut également, lors de la fabrication du matériel de bâtiment V ou CH ou de l'équipement EQ, et donc préalablement à son utilisation dans un bâtiment, fixer le répéteur interne RI et/ou l'antenne externe AE sur le matériel de bâtiment V ou CH et le(s) connecter au(x) connecteur(s) interne CI et/ou externe CE. Lorsque l'antenne externe AE est initialement fixée sur le matériel de bâtiment V ou CH, le connecteur externe CE peut éventuellement constituer un élément de connexion qui fait saillie de cette antenne externe AE (et donc qui fait partie de cette dernière).

On notera également qu'une ou plusieurs cellules solaires peuvent être initialement fixées sur le matériel de bâtiment V ou CH ou sur l'équipement de bâtiment EQ. Dans ce cas, l'alimentation du répéteur interne RI se fait par un câble qui traverse la traversée TC et qui peut être soit le câble coaxial de transfert des signaux RF, soit un câble d'alimentation dédié.

On notera également que l'invention permet d'éviter une éventuelle augmentation du nombre, ou une redistribution, des points de concentration et de gestion de la capacité dans le réseau que sont les contrôleurs de stations de base.

L'invention ne se limite pas aux modes de réalisation de matériel de bâtiment et d'équipement de bâtiment décrits ci-avant, seulement à titre d'exemple, mais elle englobe toutes les variantes que pourra envisager l'homme de l'art dans le cadre des revendications ci-après.

## Revendications

1. Matériel de bâtiment (V, CH) comprenant des faces opposées interne (FI) et externe (FE) et destiné à faire partie d'un bâtiment, **caractérisé en ce qu'**il comprend en un endroit choisi une traversée (TC) terminée par des sorties interne et externe situées respectivement au niveau desdites faces interne (FI) et externe (FE) et propre à permettre le transfert de signaux radiofréquences (RF) entre ces dernières, et au moins un connecteur choisi parmi un connecteur interne (CI), solidarisé à ladite face interne (FI) au niveau de la sortie interne et propre à être connecté à un répéteur interne de signaux RF (RI), et un connecteur externe (CE), solidarisé à ladite face externe (FE) au niveau de la sortie externe et propre à être connecté à des moyens externes d'émission et/ou de réception de signaux RF (AE).

2. Matériel selon la revendication 1, **caractérisé en ce que** ladite traversée (TC) loge au moins un câble coaxial agencé pour transférer lesdits signaux RF.

3. Matériel selon la revendication 1, **caractérisé en ce que** ladite traversée (TC) comprend une face interne métallisée et définit un conduit de guidage d'ondes RF.

4. Matériel selon l'une des revendications 1 à 3, **caractérisé en ce qu'**il comprend ledit connecteur interne (CI) et ledit connecteur externe (CE).

5. Matériel selon l'une des revendications 1 à 4, **caractérisé en ce que** ladite face externe (FE) est pourvue desdits moyens externes d'émission et/ou de réception de signaux RF (AE).

6. Matériel selon la revendication 5, **caractérisé en ce que** lesdits moyens externes d'émission et/ou de réception de signaux RF (AE) comprennent une antenne RF choisie dans un groupe comprenant au moins les antennes de type monopôle, les antennes de type dipôle et les antennes de type microstrip.

7. Matériel selon l'une des revendications 1 à 6, **caractérisé en ce que** ladite face interne est pourvue dudit répéteur interne (RI)

8. Matériel selon la revendication 7, **caractérisé en ce que** ledit connecteur externe (CE) constitue un élément de connexion desdits moyens externes d'émission et/ou de réception de signaux RF (AE).

9. Matériel selon l'une des revendications 1 à 8, **caractérisé en ce qu'**il comprend au moins une cellule solaire propre à être installée à l'extérieur et agencée pour délivrer une tension continue propre à alimenter ledit répéteur interne (RI).

10. Matériel selon l'une des revendications 1 à 9, **caractérisé en ce qu'**il est agencé sous la forme d'une paroi (V).

11. Matériel selon la revendication 10, **caractérisé en ce que** ladite paroi (V) est choisie dans un groupe comprenant au moins une vitre, une tuile, une porte, une brique et un parpaing.

12. Matériel selon l'une des revendications 1 à 9, **caractérisé en ce qu'**il est agencé sous la forme d'un châssis (CH).

13. Equipement de bâtiment (EQ), **caractérisé en ce qu'**il comprend un matériel de bâtiment (V, CH) selon l'une des revendications précédentes.

14. Equipement selon la revendication 13, **caractérisé en ce qu'**il est choisi dans un groupe comprenant au moins une fenêtre, une porte et un élément de construction.

## Claims

1. Building material (V, CH) comprising inside FI and outside (FE) opposed faces and intended to form part of a building, **characterized in that** it comprises, at a chosen location, a penetration (TC) terminated by inside and outside outlets respectively located on said inside (FI) and outside (FE) faces and capable of enabling the transfer of radiofrequency signals (RF) between them, and at least one connector chosen from among an inside connector (CI), joined with said inside face (FI) at the inside outlet and capable of being connected to an inside RF signal repeater (RI), and an outside connector (CE), joined with said outside face (FE) at the outside outlet and capable of being connected to outside RF signal transmission and/or reception means (AE).

2. A material according to claim 1, **characterized in that** said penetration (TC) houses at least one coaxial cable built to transfer said RF signals,

3. A material according to claims 1, **characterized in that** said penetration (TC) comprises a metalized inside face and defines an RF waveguide conduit

4. A material according to one of the claims 1 to 3, **characterized in that** it comprises said inside connector (CI) and said outside connector (CE).

5. A material according to one of the claims 1 to 4, **characterized in that** said outside face (FE) is equipped with said outside RF signal transmission and/or reception means (AE).

6. A material according to claim 5, **characterized in that** said outside RF signal transmission and/or reception means (AE) comprise an RF antenna chosen from a group comprising at least monopole antennas, dipole antennas, and microstrip antennas.

7. A material according to claims 1 to 6, **characterized in that** said inside surface is equipped with said inside repeater (RI).

8. A material according to claim 7, **characterized in that** said outside connector (EC) constitutes an element connecting said outside RF signal transmission and/or reception means (AE).

9. A material according to one of the claims 1 to 8, **characterized in that** it comprises at least one solar cell capable of being installed outside and configured to deliver continuous voltage capable of powering said inside repeater (RI).

10. A material according to one of the claims 1 to 9, **characterized in that** it is arranged in the form of a barrier (V),

11. A material according to claim 10, **characterized in that** said barrier (V) is chosen from a group comprising at least a window, a broadcloth, a door, a brick, and a concrete block.

12. A material according to one of the claims 1 to 9, **characterized in that** it is arranged in the form of a chassis (CH).

13. A building equipment (EQ), **characterized in that** it comprises a building material (V, CH) according to one of the preceding claims.

14. A building equipment according to claim 13, **characterized in that** it is chosen from a group comprising at least a window, a door, and a construction element.

## Patentansprüche

1. Baumaterial (V, CH) mit einer Innenseite FI und einer Außenseite (FE), die sich gegenüberliegen, welches als Bestandteil eines Gebäudes vorgesehen ist, **dadurch gekennzeichnet, dass** es an einer gewählten Stelle eine Durchführung (TC) mit einem Innenausgang und einem Außenaussang, welche jeweils im Bereich der besagten Innenseite (FI) und der besagten Außenseite (FE) münden und geeignet sind, die Übertragung von Funksignalen (RF) zwischen letzteren zu ermöglichen, und mindestens eine Steckverbindung, gewählt unter einer internen Steckverbindung (CI), welche fest auf der besagten Innenseite (FI) im Bereich des Innenausgangs angebracht und für den Anschluss an einen internen RF-Signalveretäker (RI) vorgesehen ist, und einer externen Steckverbindung (CE), welche fest auf der besagten Außenseite (FE) im Bereich des externen Ausgangs angebracht und für den Anschluss an externe Sende- und/oder Empfangsmittel für RF-Signale (AE) vorgesehen ist.

2. Material nach Anspruch 1, **dadurch gekennzeichnet, dass** die besagte Durchführung (TC) mindestens ein Koaxialkabel aufnimmt, welches für die Übertragung der besagten Funksignale RFausgelegt ist

3. Material nach Anspruch 1, **dadurch gekennzeichnet, dass** die besagte Durchführung (TC) eine metallisierte Innenseite umfasst und einen Wellenführungskanal RF definiert.

4. Material nach einem der Ansprüche 1 bis 3, **dadurch gekennzeichnet, dass** es die besagte interne Steckverbindung (CI) und die besagte externe Steckverbindung (CE) umfasst.

5. Material nach einem der Anspruche 1 bis 4, **dadurch gekennzeichnet, dass** die besagte Außenseite (FE) mit den externen Sende-und/oder Empfangsmitteln für RF-Signale (AE) versehen ist.

6. Material nach Anspruch 5, **dadurch gekennzeichnet, dass** die besagten externen Sende- und/oder Empfangsmittel für RF-Signale (AE) eine RF-Antenne, gewählt in einer Gruppe bestehend aus mindestens den Antennen vom Typ Monopolantenne, den Antennen vom Typ Dipolantenne und den Antennen vom Typ Mikrostrelfenantenne, umfassen.

7. Material nach einem der Ansprüche 1 bis 6, **dadurch gekennzeichnet, dass** die besagte Innenseite mit dem besagten internen Signalverstärker (RI) versehen ist.

8. Material nach Anspruch 7, **dadurch gekennzeichnet, dass** die besagte externe Steckverbindung (CE) ein Anschlusselement der besagten externen Sende und/oder Empfangsmittel für RE-Signale (AE) darstellt.

9. Material nach einem der Ansprüche 1 bis 8, **dadurch gekennzeichnet, dass** es mindestens eine Solarzelle umfasst, welche für die Außeninstallation geeignet und dazu ausgelegt ist, eine Gleichspannung für die Versorgung des besagten internen Signalverstärkers (RI) zu liefern.

10. Material nach einem der Ansprüche 1 bis 9, **dadurch gekennzeichnet, dass** es in der Form einer Wand (V) ausgebildet ist.

11. Material nach Anspruch 10, **dadurch gekennzeichnet, dass** die besagte Wand (V) in einer Gruppe bestehend aus mindestens einer Glasscheibe, einem Ziegel, einer Tür, eines Ziegelsteins und eines Binders gewählt ist.

12. Material nach einem der Ansprüche 1 bis 9, **dadurch gekennzeichnet, dass** es in der Form eines Chassis (CH) ausgebildet ist.

13. Gebäudeausrüstung (EQ), **dadurch gekennzeichnet, dass** sie ein Baumaterial (V, CH) nach einem der vorstehenden Ansprüche umfasst.

14. Ausrüstung nach Anspruch 13, **dadurch gekennzeichnet, dass** sie in einer Gruppe bestehend aus mindestens einem Fenster, einer Tür und einem Bauelement gewählt ist.
